# EUROPEAN PATENT APPLICATION

(11) **EP 4 033 423 A1**
(43) Date of publication of application: **27.07.2022**
(21) Application number: 21152989.6
(22) Date of filing: 22.01.2021
(51) Int. Cl.: G06Q 10/06, G06Q 10/00, G06F 8/65

(54) **TRACKER FOR CLASSIFYING INFORMATION AND A PLANNING SYSTEM**

(71) Applicant: Atos IT Services UK Limited, London WC1V 6EA (GB)
(72) Inventor: MILLIKEN, Neil, Cobham, Surrey, KT11 2QP (GB); CHALONER, Karl, Appleton, Warrington, Cheshire, WA4 5QL (GB); PAPADIMITRIOU, Christina, 14235 Nea Ionia (GR)
(74) Representative: Cabinet Camus Lebkiri

(57) **Abstract**

The invention provides a tracker which is a monitoring program analyzing the conceptual relationships between a vendor's roadmap of information on future updates (add a new feature or amend (up to date version) a feature) and a tracker's database.

The invention also provides a planning system which uses the information stored to the tracker to analyses, track and automatically identify areas of impact in terms of technologies, services, and 3rd party tools (software or hardware) for a customer in order to deliver functioning integrated services to users both proactively and timely.

## Description

### FIELD OF THE INVENTION

This invention relates to a system, it's tracker and updates classification process to help efficiently detect a risk of any interoperability issues caused by updates in any software configuration or driver.

### BACKGROUND OF THE INVENTION

A lot of software or computer hardware drivers follow a product lifecycle which requires updates. Software As A Service (SAAS) products are evergreen in terms of constantly being renewed and updated.

When software or the driver is updated (data source is upgraded, patched, revised or customized), there is a risk that a part of the modified application changes the interoperability with all other applications, which therefore must be rewritten or reconfigured.

So, this risk necessitates a service to check constant changes and updates for interoperability with other software.

For example, updates to the operating system (OS) and line of business applications results in a degradation of interoperability. Accessibility could be one of the impacted areas as just a simple update can degrade the interoperability and so can break the smooth functioning of software such as Assistive Technology (AT) (e.g. screen readers, magnifiers, SpeechToText).

For instance, when operating systems or hardware drivers are updated on a user's computer, there is a risk of interoperability issues with an Assistive Technology (AT) software installed on the user's computer and this causes the AT to cease to function. A user with a disability relies on AT software to interact with his computer. Therefore, the user will have to 'fend for himself' to resolve the issue, unless the individual works for an organization, in which case he can rely on the support department to help overcome the compatibility issues.

In some cases, the user cannot resolve the interoperability issue alone, for example if a user with a visual impairment uses an AT software such as a screen reader and updates its graphics card driver which interferes with the screen reader, the user is unable to use their computer.

Moreover, such updates require system administrators' bureaucratic methods which take time, involve many people to change access rights and potentially reconfigure their systems to resolve the interoperability problem required.

As a consequence, the end user may not be able to work for a significant period of time.

Another example is AT software such as a speech recognition system requiring access to system data which can be interpreted by a data loss protection software as malicious by the new updated data loss protection service and thus blocking this speech recognition system data or worse, deleting the personal speech recognition data.

So, it is necessary to change the configuration to ensure continuity of functioning in this part of the program.

There are many different techniques and approaches to achieving interoperability between different software. When a software is updated, these different techniques often need different tests and to change the access or to modify the software by an operator and/or add a specific adapter which is a software code that allows heterogeneous software applications and data sources to communicate and share data with each other.

But all these solutions require a lot of time, technical understanding of the software, manpower and customer feedback just to identify the interoperability issues.

There is a need to improve the identification of the risk of interoperability issues and to reduce the case of the risk of interoperability issues in case of a new update (any change in the database which can be add a new feature or service or change (up to date the version) a feature or service).

### SUMMARY

The aim of the present invention is therefore to proactively rather than reactively identify the risk of interoperability issues and through analysis and processing to determine the best solution (either with the delivery of software adaptations or the reconfiguration of system parameters) in order to provide seamless continuity of services.

Hence the object of the present invention is to provide a system to use time efficiently with resources to maintain interoperability between a piece of software and an update of another piece of software by using intelligent computer programs.

The invention provides a tracker which is a monitoring program analysing the conceptual relationships between a vendor's roadmap of information on future updates (add a new feature or amend (up to date version) a feature) and a tracker's database.

The invention also provides a planning system which uses the information stored to the tracker to analyse, track and automatically identify areas of impact in terms of technologies, services, and 3rd party tools (software or hardware) for a customer in order to deliver functioning integrated services to users both proactively and timely.

For this purpose, a first subject of the present invention consists of a tracker for classifying information on future updates comprising at least a new feature or a new version of an existing feature, the tracker including:
- a database of information on future updates, comprising tracker entries,
- a detector module configured to identify and extract new information from a vendor's roadmap on future updates,
- a classificatory module configured to classify the new information by searching for a corresponding tracker entry in the database which corresponds to the new information, the classification of the new information is:
   - "referenced" if a tracker entry is identified, and the classification of the new information is configured to update the new information in the identified tracker entry or
   - "new" if no tracker entry is found, and the classification of the new information is configured to create new tracker entry comprising the new information,
- an identification module configured to identify at least one access expert to communicate with an expert whereby:
   - If the classification is «referenced», the identification module is configured to extract from the database an expert identification data linked to the identified tracker entry,
   - If the classification is «new», the identification module is configured to search an indicator on the new information to identify an expert identification data or choose an expert identification data of the closest resembling tracker entry and is adapted to link this specific address with the new tracker entry,
- a communication module to send details about the new information to the access expert identified from the expert identification data extracted or identified or choose.

The use of roadmap information allows the new information on updates (to add new features or change a version) to be automatically identified by being compared with the database. The classification of the new information on the update in «referenced» allows the experience of updates to be used with different software and the classification in «new» allows the database to increment its evolution and the identification module allowing the expert to be quickly informed and automatically save time.

The expert can be an expert person(s) or an expert system and the expert identification data can be a specific address like an address mail or a module or the identification of the expert (so the expert identification data can be the access expert otherwise the database has a directory of the access expert in relation to the expert identification data to communicate with the expert). The expert person can be a group of expert peoples or an expert and the expert system can be a module having specific processes or method (function/module) or an artificial intelligence.

So, the invention can help inform system administrators and controllers, on software changes by reducing the risk, time, costs and efforts associated with updated maintenance and support to update their software.

This invention optimizes the value of the roadmap and the continuity of services in the working station by proactively adapting the software or reconfiguring the environment parameters bridging together different specific people or processes for the visibility and the better control on providing an update.

Indeed, the expert can decide, based on the details of the upcoming change (update or new feature), if there is a need to make changes to the affected/depended software of the update or to the environmental parameters (like configuration settings of the operating system) or otherwise inform to do not update when the affected/depended software of the update or the environmental parameters have a risk of interoperability issues.

The tracker, according to the invention, may also have the optional features listed below, considered individually or in combination:
- The tracker comprises a download module configured to access a roadmap on a server like on a website, API RSS feed, email, etc. and to extract the information from the roadmap.

This allows the expert to be independent and automatically alerted in case of a new update or a new feature.
- The tracker comprises a reception module to receive the vendor's road map on future updates.
- The communication module is configured to:
   ∘ identify the expert identification data to be used or send a new expert identification data received in a message in relation to a new tracker entry or an updated tracker entry to the identification module configured to change the older access expert by a new access expert linked by this new expert identification data, and
   ∘ send the new information received to the new access expert.

This allows firstly, in case of change or by error the expert, the expert identification data to be updated, and secondly the new expert to be alerted.
- The tracker is configured to identified if in the information the new access expert is changed, the tracker is configured to send the details or items about the new information by the communication module to the new access expert for the expert.
- The tracker comprises an API to change information in the database.
- If the new expert identification data is changed, the communication module is configured to send the items or details about the new information to the new access expert.
- The tracker comprises a planner module configured to create a planner entry according to the new information on the new update and to send it to the access expert.

This allows the expert to be helped by reducing the risk, time, costs and efforts by using the planification history.

According an example, the planner module is configured to send the planner entry by the communication module to an impact identifier.

According an example, the planner module is configured to add a planner entry for each tracker entry having status new or in progress.
- The classificatory module comprises an API to integrate new data in the database and to update each entry of the database.

The API enables the database to be incremented.
- Each tracker entry comprises at least one item from a title, a description, a meta-data, a release type, and at least the items of feature/service and status whereby the classificatory module uses this information to classify the new information.

These items allow the new information on the update to be classified and the new feature/service information to be made easier for the identification module to find the expert identification data.
- The database comprises at least one entry among which:
   ∘ feature/service entry comprising at least one item from the title, description meta-data, release type and at least the item of technology/service information,
   ∘ technology entry comprising at least one item from the title, description meta-data and at least the item of expert identification data,
   ∘ planner entry comprising at least the item of tracker entry correlation, priority, customer expert, and at least one item from impact, funding, budget status, development quarter, status,
   ∘ area-of-impact entry comprising at least one item from a title, the description and the meta-data, and at least one item of an impact and a customer expert item,
   in which, the classificatory module is configured to create a new feature/service entry when the feature/service information is new, in the new tracker entry,
   and whereby the identification module is configured to find the expert identification data in the technology entry linked to the feature/service entry also linked to the tracker entry.

This allows the new information on the update to be classified and either the new tracker entry to be created or an existing tracker entry to be updated and the new feature/service entry and technology entry to be made easier for the identification module to find the access expert.
- The classificatory module is configured to classify a status item of the corresponding entry:
   a status flag depending on the status found in the new information on the update,
   a new status flag if it is a new entry, or
   a progress status flag if there is no flag status found in the new information on the update,
   and whereby the communication module is configured to send the status item to the access expert.

This classification of status item can be used for the person or user or team working on the updates of the roadmap to facilitate and reduce time and manpower to a triage process.
- The information or details sent to the access expert includes a minimum of the status item which has been classified by the classificatory module. This allows time and manpower to be saved and a triage process to be started by the expert (expert person or expert system).
- The access expert is a dialog box displayed on a screen of the expert, or an address mail of the expert, or a module.

A second subject of the invention consists of a planification system comprising the tracker of the invention (with or without the different optional features listed) and an impact identifier system comprising a prioritization module, an impacted areas identification module, a pre-deployment governance module wherein,
- the prioritization module is configured to:
   ∘ define the priority of each planner entry from the planner module of the tracker, by
      ▪ checking the status of the planner entry or of the tracker entry in the planner entry,
      ▪ updating the planner entry:
         - a level of priority like 1 to 4,
         - a status of the planner entry like only information or new,
   ∘ send the planner entry with the information updated to:
      ▪ the impacted areas identification module except if the status is only information
      ▪ the planner entry to the database if the status is only information,
- the impacted areas identification module is configured to
   ∘ receive the planner entry,
   ∘ identify the impact of a specific tracker entry in various areas like accessibility, security and sustainability,
   ∘ update the planner entry in function of the impact found,
   ∘ send the planner entry updated to the database.

According to the invention, the system may also have the optional features listed below, considered individually or in combination:
- The impacted areas identification module is configured to assess these impacts and sent the assessment of the area to the pre-deployment governance module.
- the impacted areas identification module is configured to send to the pre-deployment governance module if an impact is identified, and the pre-deployment governance module can be triggered after the reception of the impact.
- the pre-deployment governance module is configured to be triggered after the identification of impact by the impacted areas identification module and the pre-deployment governance module is configured to use its historic data to identify any missing impact by the impacted areas identification module.
- the pre-deployment governance module is configured to identify missing areas of impact utilizing feedback and/or historic data and by applying methods to predict and prescribe so, and the impact identifier system is configured to decide for each planner entry if extra action is required or if it is only an information update to the tracker system.

The use of prioritization module allows each planner entry to decide its priority and impact.
- The prioritization module is configured to find the planner entries in the database and updates if needed the corresponding entries.
- The impacted areas identification module is configured to find the area-of-impact entries in the database,
- The pre-deployment governance module is configured to find the historic data in the database to utilize for its prediction and prescription method,
- The affected customers identification module is configured to find the expert, customer expert, customer SPOC and customer support expert entries in the database and where it updates the corresponding planner entries,
- The delivery plan module is configured to find the planner entries to create the prioritized, cost-estimated, timeline defined and with the customers affected delivery plan, in the database.
- The database comprises at least one entry among which:
   ∘ Customer entry comprising at least one item from feature/service entry and a technology entry, and at least the item of a customer expert, customer info and a customer SPOC
   ∘ Role entry to relate the feature/service or/and technology or customer with an address of an expert, each role entry comprises the items: a type (which can be an address of the expert, the customer expert, customer SPOC, customer support expert), a feature/service entry, a technology entry and a customer entry
      - The database is enhanced with:
   ∘ planner entry comprising at least one item from:
      ▪ at least one item from tracker entry correlation, priority,
      ▪ at least one item from customer expert, impact, funding, budget status, development quarter and status (as extended in the second subject)
   ∘ area-of-impact comprising at least one item from title, description, meta-data, at least one item of customer expert and impact,
   in which the prioritization module finds the planner entry, which is linked to the tracker entry,
   and whereby the impacted areas identification module finds the areas of impact in the area-of-impact entry or list of entries linked to customer expert.
- The system comprises the expert comprising the impact identifier system.
- the impact identifier system is configured to communicate by the access expert to the expert.
   According an example, the update of the planner entry by the prioritization module comprises a request to confirm or to decide the items sent to the expert by sending the request to the access expert. (in this case an human expert can enter or amend the values to respond to the request and/or confirm the request)
- The planner entry comprises:
   - the development quarter items and
   - budget item
   wherein the development quarter item and budget item in the database can be updated by the expert if the status is info only, otherwise the items are updated as not applicable. In case where the expert is human, the system development quarter item and budget item are updated manually and in case where the expert is an expert system, according the information it can update these items automatically or send a request to an expert human.
- The impacted areas identification module is configurated to:
   i. decide for each planner entry (which relates to a tracker entry having status new or in progress) if the update has an impact in the area of accessibility, security, sustainability as well as for each area-of-impact found in the tracker and if yes, it identifies the impact and if the update needs a software adaptation or configuration,
   ii. decide for each planner entry if the update has any missing impact using pre-deployment governance module and
   iii. update for each planner entry with the impact information.
- The pre-deployment governance module is configurated to
   i. decide for each planner entry (which relates to a tracker entry having status new or in progress) if the update has any missing impact not identified by the impacted areas identification module using historic data in a predictive and prescriptive method, and
   ii. update for each planner entry the impact information.
- The planification system also comprises a customer identifier, which includes an affected customers identification module, an interested customers identification module and a delivery plan module wherein:
   i. the affected customers identification module is configured to:
      1. identify for each planner entry relating to a tracker entry having status new or in progress, the customers related to the feature/service or technology of the planner entry,
      2. for each customer identified having an interest, identify a customer SPOC, and request it if the customer should receive the change (software adaptation or configuration update) by default
   ii. the interested customers identification module is configurated to
      1. track the customers interested to acquire the software adaptation or configuration update,
      2. to identify a contact specific address of customer communicator to communicate the upcoming update and its impact
      3. decide for a customer entry if they are interested to fund the change software adaptation or configuration update
      4. update the customer decision to the related planner entry into the tracker,
   iii. the delivery plan module is configured to export or update for each planner the priority, a delivery plan, which includes:
      1. a list of prioritized planner entries,
      2. a cost estimation of the plan including the cost estimation of each planner entry,
      3. timeline of execution including the development quarter of each planner entry,
      4. a list of affected customers including those who by default will receive the update as well as those willing to fund the delivery of the update
   iv. and the customer identifier is configured to update for each planner the priority, budget, development quarter and status into the tracker.
- The database comprises:
   ∘ planner entry enhanced with a list of customer entries
   ∘ customer entry comprising at least one item from customer info, customer expert at least one item of customer expert, at least one item of feature/service entry, at least one item of technology entry and at least one item of customer SPOC entry.
   ∘ role entry comprising of type
      ▪ a type expert if it is the module or person which is part of the tracker system and it is used on the classificatory module or identification module or communication module,
      ▪ a type customer expert if it is the module or person with which the expert interacts in the impact identifier system,
      ▪ a type customer support expert if it is the module or person with which the customer expert interacts in the customer identifier,
      ▪ a type customer SPOC if it is the module or person with which the affected customers identification module interacts to retrieve info during the customer engagement process,
   ∘ at least one item of feature/service entry, at least one item of technology entry and at least one item of customer entry.
- The customer identifier is adapted to:
   ∘ decide for each planner entry if the update is a default software adaptation or configuration of the roadmap or if the update needs to be adapted to a custom software update of custom configuration for a customer based on the customers interest received,
   ∘ send a request to a customer SPOC linked to each customer to decide if the update linked to the planner entry affects the linked customers and retrieve a decision by the customer via the customer engagement process,
   ∘ send a request to a customer support expert, linked to each customer having a custom update configuration decided, and
   ∘ for each planner entry the customer expert updates the database, send a request to interested customers identification module to identify the customers interested in the update and willing to fund it and update the database including the funding info.

This planification system allows the interest of the customer to be synchronized with the update from the roadmap and to work to provide a custom software adaptation or configuration on the update.

This invention optimizes the value of different services and establishes governance, visibility and controls to improve the continuous delivery of updates without any downtime for the end user's working environment.

The planification system according to the invention may also have the optional features listed below, considered individually or in combination:
- the customer identifier system includes an affected customers identification module which identifies a customer SPOC that communicates with the customer about the software risk of any disfunction interoperability with the updates of the tracker entry, and is configured to
   i. send a summary of information about the updates based on the status flag of the entry to each contact specific address,
   ii. receive interested customer flags by each customer SPOC or customer support expert,
   iii. update the database with the customer related info to the tracker entry related to the planner entry.

This allows the contact specific address to be the customer(s) single point of contact which can engage a process with the customer to identify the interest of the update, to be directly linked to the tracker entry.

A fourth subject of the invention consists of a classification process on updates comprising the following steps:
a. identifying new information on the update in a road map on the future updates,
b. classifying the new information by searching for a corresponding entry in the database which corresponds to the new information on the update, the classification of the new information on the update is
   i. «referenced» if an entry is found, and a classificatory module uploads the new information on an update in the corresponding entry of the database or
   ii. «new» if no entry is found, and the classificatory module creates a new entry comprising the new information,
c. Identifying at least one access expert to communicate with an expert whereby
   i. If the classification is «referenced», an identification module extracts in the database an expert identification data linked to the entry,
   ii. If the classification is «new», the identification module searches for an indicator on the new information on the update to identify an expert identification data or choose an expert identification data of the closest resembling entry and is adapted to link this an expert identification data with the new entry,
d. Sending information or details or items about the new information to an access expert identified from the expert identification data extracted or identified or choose.

The process can comprise each of the steps of the optional features mentioned in the first invention.

A fifth subject of the invention consists of a system comprising a memory including a monitoring program, a modem and a processor to launch the monitoring program in order to produce the tracker according to the first invention (with or without the different optional features listed). The database can be in the memory or in a remote drive memory accessible by the modem. The information is sent via the modem.

Other characteristics and advantages of the invention will be described in greater detail in the following description.

### BRIEF DESCRIPTION OF THE DRAWINGS

The invention will be understood better by reading the following description, which is provided purely for the purposes of explanation and is in no way intended to be restrictive, with reference to:
- Figure 1, which is a general representation of planification system according to one embodiment to the invention,
- Figure 2, which shows an example of the functional components of the tracker of the planification system in figure 1.
- Figure 3, which shows an example of the triage process of the planification system in figure 1.
- Figure 4, which shows an example of the customer synchronization system of the planification system in figure 1.

### DEFINITIONS

"Application Program Interface (API)" means a series of functions that programs can use to make the operating system perform a specific function. Using Windows APIs, for example, a program can open windows, files, and message boxes-as well as perform more complicated tasks-by passing a single instruction.
"RSS" means Really Simple Syndication.
"Module" means software code which can be a part of a software or a distinct software.
Adapter" means software code that allows software applications and hardware or data sources to interoperate and share data with each other (for example a driver or a software).
"DoD" Department of Defense
"OS" operating system as Windows^{®} etc....
"access expert" means to communicate via standard communication such as for example for a person by email, SMS, specific message in a web or intranet platform, RSS etc....or for an expert system a public or private network.
"Expert" can be a human which is an expert person or an expert system, which have access to the access expert, for example having the role of Global Service Architect / Global Owner.
"Contact specific address" can be the address of the person in contact with the customer having the software.
"SPOC": Single Point of Contact or Specific Point of Contact. It is a person with specific expertise in a certain field.
"to include features" means "to comprise features" which also means that it includes those features, but that it does not exclude the presence of other features.

### DESCRIPTION OF THE PREFERRED EMBODIMENT

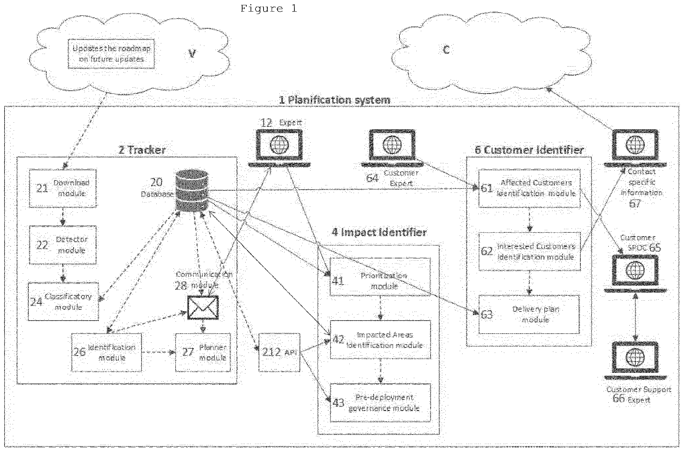

Figure 1 shows a general representation of a planification system 1 comprising a tracker 2 according to one embodiment of the invention.

The vendor is in this example, the operating system owner which has a roadmap of updates online on a vendor website which is accessible via internet through the RSS feed/API. The roadmap of updates is called roadmap in the following.

In this embodiment the tracker 2 comprises a download module 21 configured to access and extract the road map comprising information on updates of first software or directly the information from the vendor website, blogs, newsletter or email notifications. For example, the download module 21 downloads the latest roadmap at regular intervals, i.e. daily. An alternative solution is for the tracker to automatically receive the latest version information on the upload added on the roadmap online from the vendor or a detector.

In this example, the roadmap includes new information about a future OS update with specific changes in the graphic card driver.

The tracker 2 also includes a database 20 of information on updates comprising a plurality of tracker entries corresponding to each type of update.

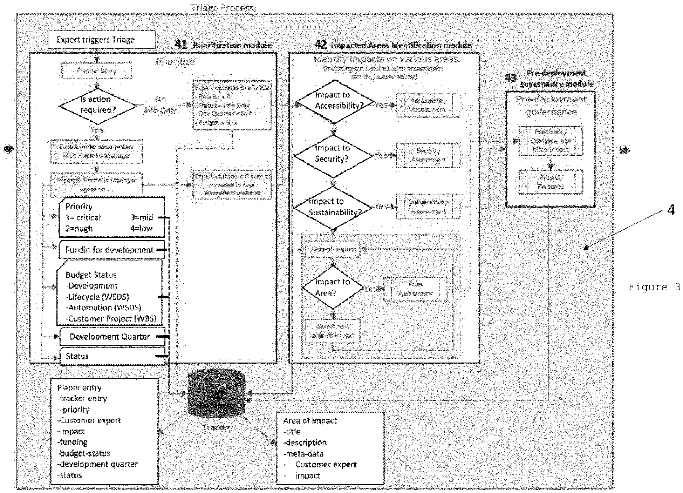

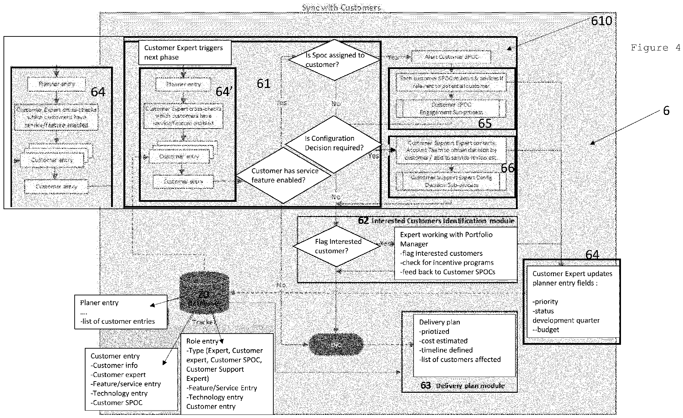

In this embodiment, the database 20 comprises the tracker entries, service/feature entries, technology entries and planner entries. In this, example, the planification system 1 comprises also an example of impact identifier system for a triage process visible in figure 3 and an example of the customer identifier 6 visible in figure 4, which are interfaced with the data base 20.

In another example not represented, the planification system 1 comprises in addition to the tracker 2, only the example of impact identifier system 4 or only the customer identifier 6.

In particular, regarding this example represented, the database 20 includes seven types of entries: the tracker entries, the service/feature entries, the technology entries, the planner entries, but also area-of-impact entries, customer entries and role entries that are linked to each other.

The area-of-impact entries, the customer entries and the role entries are shown in figure 3 and 4 and used by the impact identifier system 4 or/and only the customer identifier 6 are explained in the following.

In this example of the tracker 2, each tracker entry, service/feature entry and technology entry type includes a title item, a description item and a meta-data item.

Each tracker entry includes a service/feature item and each service/feature entry includes a technology item. Of course, each entry type can include more items, in this example, each tracker entry and each feature service entry also include a release type item and each tracker entry includes a status item and the technology entry includes an expert item.

In this example of the tracker 2, each planner entry includes a tracker entry, a customer expert item and a priority item.

Of course, each planner entry can include more items. In the example of the planification system 1 of the figure 3, it comprises the impact identifier system 4, each planner entry includes impact item, funding information item, budget status item, development quarter item and status item.

The tracker 2 comprises a detector module 22 configured to identify any new information in the road map downloaded. In this embodiment, the detector module 22 compares the roadmap downloaded on a given day with the roadmap stored in the database to identify the new information. In another embodiment, the detector module 22 detects the new information of the update in the roadmap found on the website/RSS feed/newsletter/etc. In this example, the detector module 22 detects the new information about a future OS update with specific changes in the graphic card driver but can also detect new information on the information roadmap on future updates, for example a change of status of a driver update.

In the event where the vendor sends by a server each new roadmap, the detector module 22 identifies the new information in the sent roadmap.

The tracker 2 also includes a classificatory module 24 configured to classify the new information by searching for a corresponding tracker entry in the database which corresponds to the new information.

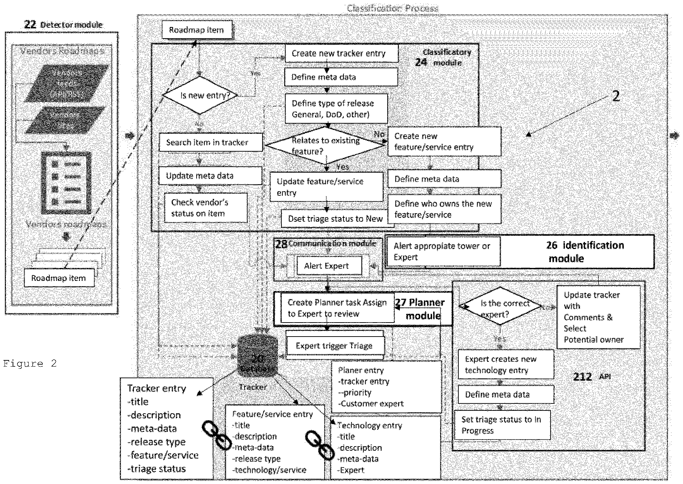

Figure 2 shows an example, how the functional components of the tracker 2 interact with each other to allow the interaction between the roadmap of a vendor with an expert 12. This figure 2 shows an example of the functional steps processed by the classificatory module 24.

The expert 12 can be a human which is an expert person or an expert system. In this first example, the expert 12 is an expert system.

The first step is to classify the new information on the update of the roadmap as «referenced» or «new» in one tracker entry of the updates information database 20.

If an older piece of information on the update with specific changes in the graphic card driver exists in the database, for example the information on the update has already been downloaded, the tracker entry having this "old information" is identified by the classificatory module 24 and the new information is uploaded in this corresponding tracker entry. For example, in the case of specific changes in the graphic card driver, in the example of figure 2, the classificatory module 24 uploads different items: the meta-data and changes the status as for example "complete" to "in progress". "Complete" is an example term which means the upload had been delivered but another term can be employed such as "rolling out". "in progress" is also an example of term, which means that the upload is changed or is new and needs to be analysed in a triage process explained below, another example term could be "launched". A tracker entry having the status "complete" means that the whole process has been completed and no further action is needed whereas if the status is " in progress" something is ongoing. In another word, a tracker entry having the status "complete" does not have the triage process and synchronisation with the customer process as it explained below.

In the case of no tracker entry can match with the new information about an update with specific changes in the graphic card driver, the classificatory module 24 classes this new information as "new" and creates a new tracker entry by uploading the different items of the new information in this new tracker entry.

In the example of figure 2, if there is any meta-data details and any release details in the new information which are identified, the classificatory module 24 defines the meta-data and the type of release in the corresponding item. For example, in the case of specific changes in the graphic card driver, the type of release can be "general" but can also be "DoD" or other.

In this embodiment, the classificatory module 24 can check if the new updates information comprises features/services information or items which correspond to one feature service entry in the updates information database 20. This allows the information and experience to be used from different older updates to determine if it affects the feature/service. If yes, the classificatory module 24 uploads these features/services details to the features/services item of the new tracker entry and sets status as new (due to the new tracker entry). If no feature/service entry matches with features/services details, the classificatory module 24 creates a new feature service entry in the database 20 and adds its meta-data details and defines the owner(s) of the feature/service (general or DoD etc.) in the release item.

The tracker 2 also includes an identification module 26 configured to identify at least one access expert of the expert 12. The access expert of the expert 12 can be an expert module for an expert system or can be a mail or a notification or dialogue box of a service/software for an expert person.

The identification module 26 searches for the expert identification data in correlation with the expert 12 in the item of the technology entry linked to the feature service entry linked to the identified or new tracker entry.

In the event of a new tracker entry, the identification module 26 selects an access expert of the expert 12 based on the new information. For example, the identification module 26 finds the closest resembling entry, which can be a tracker entry or a features/services entry or a technology entry in the database.

If no entry closely resembles, it selects a predetermined default access expert of an expert 12 or send a message to a predetermined default access person for a person in charge who, upon creation of a new feature/service, will be informed by this message that no entry has been found (not found because no entry sufficiently close) to another entry and he/she can manually decide and update the fields with the correct info in the database or by sending a message comprising the information.

The tracker 2 also includes a communication module 28 to send the items about the new information to the access expert identified in order that the expert 12 has access at these items.

If the tracker entry is new, the planification system 1 includes an API 212 and the expert 12 can sent a data (by the expert module or by a message sent by an expert from the access expert) which can create any new technology entry or change the new technology entry and can add or change the details of the technology entry in each item. In particular, if the access expert was wrong, the expert 12 can select or add a right expert identification data of the expert 12. In this example as the expert is an expert system, if an information is not correct, for example the expert module is wrong, the expert system can select the right expert module with API 212 or sent a message to an expert person to find the right expert. The tracker is configured to identified the case of a new expert identification data which is, in this embodiment, located in the technology entry, the communication module 28 is configured to send the item about the new information and the potential information added by the expert (module or person) to the new access expert in relation to this new expert identification data. The tracker can comprise the API 212.

In another embodiment, if the access expert of the expert 12 was wrong, the expert can send a message to the tracker comprising the new access expert of the expert 12. The tracker 2 is configured to create a new access expert with expert identification data in relation to the data received. The communication module 28 is configured to send the new access expert 12 to the identification module 26 configured to change the older access expert linked to the entry, by the new access expert of the expert 12. The communication module 28 is also configured to send the item about the new information to the new access expert for the new expert 12.

In this embodiment, the tracker 2 also includes a planner module 27 to create a planner entry based on the details in the new information and to send them to the access expert for the expert 12 by the communication module 28. The planner entry helps the expert for the triage process. In this example, the planner entry comprises title, description metadata and expert. The classificatory module 24 can use these planner entries to find the expert 12 by comparing the items with the items of the new entry. In this example, the expert identification data can be the planner entry or the expert item. The tracker can find the access expert with a repertory of this expert identification data.

In the repertory of the data base, there is a plurality of access expert, some can be those of person experts, or other can be those of expert systems. The expert identification data identified by the tracker in this example is link to the access expert of the expert 12 which is in this example an expert system but if the expert identification data identified is another expert identification data, the linked access expert can be for a person expert or an expert system.

Figure 3 shows a triage process of a second example of the planification system 1.

The difference between the first example of the planification system 1 represented in figure 1 and the second example of the planification system 1 of figure 2 is only that the impact identifier 4 comprises the expert 12 in the second example while in the first example there are separated.

In this second example of the planification system 1, if the expert 12 is an extern expert module or address mail of a person expert, the impact identifier 4 is adapted to communique with the extern expert like in the first example.

In this second example of the planification system 1, it also includes the impact identifier 4 as mentioned before. The impact identifier 4 includes a prioritization module 41, an impacted area identification module 42 and a pre-deployment governance module showed in figure 1 and 3.

In the case of the first example or if the expert 12 is a human, the impact identifier 4 can help the expert 12 by sending message or open a dialogue box. In these cases, the impact identifier 4 is also a standalone program.

The prioritization module 41 and the area identification module 42 update the database 20 wherein each area-of-impact entry can include the title item, the description item and the meta-data item, a customer expert item and an impact item.

The prioritization module 41 is configured to receive or to extract from the data base the planner entry updated or created by the tracker entry and to decide if the update has impact and to decide the priority of the planner entry. The priority item in the planner entry can have several levels, in this example four levels 1-4 wherein 1 is critical and 4 is low.

If the planner entry has only information updates and there is no impact on any area-of-impact entry (the tracker entry is not new), then the expert 12 defines for the planner entry the priority to 4, the status to information only, development quarter to N/A (not applicable) and budget to N/A (not applicable). Otherwise the expert 12 can identify the impacts on various areas utilizing the impacted areas identification module 42.

The impacted areas identification module 42 is configured to identify if the update impacts the areas of accessibility, security, sustainability or any other area of impact as defined in the database, to identify any missing impact utilizing the pre-deployment governance module 43 and to update the planner entry in the database 20. This different information can be added in the database linked to the entry tracker.

In the first example, the impacted areas identification module 42 can be an impacted areas identification expert system.

In this example, if the update impacts the areas of accessibility, security, sustainability or any other area of impact as defined in the database, the impacted areas identification module 42 is configured to assess this impacts and sent the assessment of the area to the pre-deployment governance module 43.

The pre-deployment governance module 43 is configured to identify missing impacts using any previous feedback found in the database or utilizing historic data to predict and/or prescribe via comparison of data or other means. The pre-deployment governance module 43 compares with its historic data of impact area, check in the database these assessments of the impact found and add the missing impacts.

In another example of the figure 1, the expert 12 can trigger the impacted areas identification module 42 which is configured to request the expert 12 to identify if the update impacts the areas of accessibility, security, sustainability or any other area of impact as defined in the database, to identify any missing impact utilizing the pre-deployment governance module 43 and to update the planner entry in the database 20. For example, the impacted areas identification module 42 is configured to request if there is an impact to accessibility? Or an Impact to security? Or an impact to sustainability? And the expert 12 confirms or amends the values at each request.

Planification system 1 also includes a customer identifier 6 including an affected customers identification module 61, an interested customers identification module 62 and a delivery plan module 63 showed in figure 1 and 4.

Figure 4 shows a synchronisation with the customer of a third example of the planification system 1.

The affected customers identification module 61 can comprise or communicate with a customer expert 64 (visible in figure 1).

The difference between the first example of the planification system 1 represented in figure 1 and the third example of the planification system 1 of figure 2 is only that there is a second customer expert 64' in the affected customers identification module 61 in the second example.

The first customer expert 64 can be a communication address of a person or team with the role of customer expert person which fill dialog box having access of information for informing these items or take the decision by a computer or an expert system The customer expert 64 can be a customer expert system (module or intelligence artificial) or a communication address of a person with the role of customer expert person which fill dialog box.

In this third example, the affected customers identification module 61 is a module, the second customer expert 64' is an expert system like a module or intelligence artificial.

In this example, the affected customers identification module 61 comprises the customer expert 64 to identify if the service/feature is enabled.

The impact identifier 4 of the third planification system 1 is the impact identifier 4 of the first example but can be also the impact identifier of the second example.

The database comprises also customer entries, in which each customer entry comprising at least one item from customer info, customer expert at least one item of customer expert, at least one item of feature/service entry, at least one item of technology entry and at least one item of customer SPOC entry.

The database comprises also role entries to relate the feature/service or/and technology or customer with an address of an expert, each role entry includes a type (which can be an address of the expert, the customer expert, customer SPOC, customer support expert),, a feature/service entry, a technology entry and a customer entry.

The type is for example expert, or customer expert 64 or customer SPOC or customer support expert. There is different customer expert 64 working on different technology or/and Feature/service or customer SPOC or customer support expert working with different customer. The roles entry allows to determine the expert, or customer expert or customer SPOC or customer support expert in function of the customer or/and technology or/and Feature/service.

The synchronization with customers comprises a step of identification of affected customers and their interests when need to have an adaptation 610.

The affected customers identification module 61 is configured to do this step 610 by identifying, with or without the first customer expert 64, for each planner entry (which is linked to a tracker entry having status "new" or "in progress") the customers that the update affects the software or parameter which needs an adaptation due to a risk of interoperability and also their interests by an interested customer flags . Their interested customer flags can be "No manual action is done" or "receive the software adaptation" or "configuration by default" or a "decision to fund the required changes" as well as if the change requires a configuration decision or not.

For this, the affected customers identification module 61 identifies for each planner entry relating to a tracker entry having status new or in progress, the customers related to the feature/service or technology of the planner entry.

The affected customers identification module 61 is configured to send a summary information about the updates based on the status flag of the tracker entry to each contact specific address of customer expert 64, 64'.

Each customer expert 64, 64' which or who has identified the service/feature entry or entries that the planner entry affects, identifies in the database the customer or list of customers which have the specific service/feature. The service/feature entry or entries that the planner entry affects are received from the impact identifier 4 or the affected customers identification module 61 or are extracted from the database 20.

The affected customers identification module 61 is configured to receive if the affected customer comprises a service or feature enabled which can need to adapt the software or configuration from the customer experts 64, 64' which can be an interested customer flag. The affected customers identification module 61 can affect the interested customer flags for example "receive the software adaptation" or "configuration by default" or "No manual action is done" in function of these information.

The affected customers identification module 61 is configured to check for each affected customer identified, if a customer SPOC 65 is linked to the affected customer identified. The affected customers identification module 61 can also identified if the identified customer has an assigned Customer SPOC 65 for each service/feature enabled in the database. For each customer SPOC 65 assigned, the affected customers identification module 61 is configured to alert the customer SPOC 65 in order to review. The customer SPOC 65 determines if the customer should receive the change (software adaptation or configuration update) by default and the affected customers identification module 61 is configured to receive information if the software needs an adaptation from the customer SPOC 65 identified which can comprise the interested customer flags. The interested customer flags can be for example "receive the software adaptation" or "configuration by default" or "No manual action is done".

The affected customers identification module 61 is configured to check for each affected customer identified, if a configuration decision is required.

In this example, the affected customers identification module 61 communicates with a customer support expert 66 (visible also in figure 1) if configuration decision is required to confirm the interest to track the customers interested to acquire the software adaptation or configuration update. The affected customers identification module 61 communicates with a customer support expert 66 by a contact specific address of a customer support expert 66 of the entry and is configured to receive all information that need to be changed from the customer support expert 66 by the contact specific address identified, which can comprise the interested customer flags. The interested customer flags can be for example "receive the software adaptation" or "configuration by default" or "No manual action is done".

As a consequence, the affected customers identification module 61 detects the affected customers and if the software needs an adaptation in function of customer SPOC and customer support expert identified in the database and so determine the interested customer flags of each customer for each tracker entry having status new or in progress.

For example, if a contract mentions that the owner of the planification system adapts the configuration or software (software update or configuration update) when the customer needs an adaptation if there is a risk for the service or feature, the affected customers identification module 61 allows to find it alone or by the help of the customer SPOC.

The affected customers identification module 61 is finally configured to send the list of customers, customer SPOC 65 linked of the customers which does not have a configuration decision required to the interested customers identification module 62 linked to the tracker entry and their interested customer flags.

If it does not receive any information, the affected customers identification module 61 is configured to remind the customer SPOC 65 or customer support expert 66.

Each customer expert 64 receives information from the customer SPOC 65, customer support expert 66 corresponding or by the affected customers identification module 61 and from interested customers identification module 62. Each customer expert 64, 64' updates the planner entry information of priority, impact, status, development quarter and budget in the database 20.

For the decision, if this customer is interested in funding the necessary software update or configuration update in order to keep the robustness and continuity of service of their user's environment, the customer identifier 6 includes an interested customers identification module 62 which identify a contact specific address of a customer communicator 67 to communicate the upcoming update and its impact, and is updated by the customer communicator 67 (visible in figure 1). The contact specific address or the updated by the customer communicator 67 can be made for example by a dialogue box. The customer communicator 67 communicates with the customer C about having a software risk of any dis-functioning interoperability upon the roadmap update identifies who is interested in. The customer communicator could be the customer SPOC 65, the customer expert or any other person in contact with the customer.

The interested customers identification module 62 is configured to receive the interest flag "decision to fund the required changes" or "No manual action is done". If it does not receive any information, the interested customers identification module 62 is configured to remind the contact specific address of a customer communicator 67.

The customer expert 64 updates the planner entry information of priority, impact, status, development quarter and budget in the database. In this case, the customer interest knowledge is sent to the access expert for the expert 12 which can check for incentive programs and send feedback to the customer SPOC.

The delivery plan module 63 is configured to provide a plan with prioritized planner entries including which are the roadmap updates to be supported, the cost estimation, the timeline for delivery, the list of customers and more information which can be conveyed by the database.

The delivery plan module 63 is adapted to can send the plan at a specific address adaptor in charge of the adaptation of the software or configuration for the affected customer which have an interested flag "receive the software adaptation" or "configuration by default" or a "decision to fund the required changes".

Consequently, each customer can have the choice to have a continuously working environment with no interoperability issue or he/she can decide which updates interested him/her.

## Claims

1. Tracker for classifying information on future updates comprising at least a new feature or new version of an existing feature, the tracker including:
- a database (20) of information on future updates, comprising tracker entries,
- a detector module (22) configured to identify and extract new information from a vendor's road map on future updates,
- a classificatory module (24) configured to classify the new information by searching for a corresponding tracker entry in the database which corresponds to the new information, the classification of the new information is
i. "referenced" if a tracker entry is identified, and the classification module is configured to upload the new information in the identified tracker entry or
ii. "new" if no tracker entry is found, and the classification module is configured to create new tracker entry comprising the new information,
- an identification module (26) configured to identify at least one access expert to communicate with an expert whereby
i. if the classification is "referenced", the identification module is configured to extract from the database an expert identification data linked to the identified tracker entry,
ii. if the classification is "new", the identification module is configured to search an indicator on the new information to identify an expert identification data or choose an expert identification data of the closest resembling tracker entry and is adapted to link this expert identification data with the new tracker entry,
- a communication module (28) to send details about the new information to the access expert identified from the expert identification data extracted or identified or choose.

2. Tracker according to claim 1 comprising a download module (21) configured to access and extract the information on from the road map on a website.

3. Tracker according to claim 1 comprising a receive module to receive the vendor's road map on future updates.

4. Tracker according to any one of the preceding claims, the tracker is configured to identify if expert identification data is changed, and to send the details or items about the new information by the communication module (28) to the new access expert for the expert.

5. Tracker (2) according to any one of the preceding claims comprising a planner module (27) configured to create a planner entry according to the new information on new update and to send it to the access expert for the expert (12).

6. Tracker (2) according to any one of the preceding claims wherein each tracker entry comprises at least one item from a title, a description, a meta-data, a release type, and at least the items of feature/service and status and whereby the classificatory module uses this information to classify the new information.

7. Tracker (2) according to the preceding claim wherein the database comprises:
- feature/service entry comprising at least one item from the title, description meta-data, release type and at least the item of technology/service information.
- technology entry comprising at least one item from the title, description meta-data and at least the item of expert identification data,
- planner entry comprising at least the item of tracker entry correlation, priority, customer expert, and at least one item from impact, funding, budget status, development quarter, status,
- entry comprising at least one item from the type (expert, customer expert, customer SPOC, customer support expert, etc), at least the item of feature/service information, at least the item of technology information and at least the item of customer information,
in which the classificatory module (24) is configured to create new feature/service entry when the feature/service information is new in the new tracker entry,
whereby the identification module (26) is configured to find the expert identification data in the technology entry linked to the feature/service entry also linked to the tracker entry.

8. Tracker (2) according to the preceding claims, wherein the classificatory module (24) is configured to classify a status item of the corresponding entry:
- a status flag depending on the status found in the new information,
- a new status flag if it is a new entry, or
- a progress status flag if there is no flag status found in the new information,
and whereby the communication module (28) is configured to send the status item to the access expert for the expert (12).

9. Planification system (1) comprising the tracker (2) according to claim 1 to 8 and an impact identifier system (4) comprising a prioritization module (41), an impact identifier system (42), a pre-deployment governance module (43) wherein,
- the prioritization module (41) is configured by
i. define the priority of each planner entry from the planner module of the tracker, by
ii. checking the status of the planner entry or of the tracker entry in the planner entry,
iii. updating the planner entry:
1. a level of priority like 1 to 4,
2. a status of the planner entry like only information or new,
- send the planner entry with the information updated to:
i. the impacted areas identification module except if the status is only information
ii. the planner entry to the database if the status is only information,
- the impacted areas identification module (42) is configured to
i. receive the planner entry,
ii. identify the impact of a specific tracker entry in various areas like limited to accessibility, security and sustainability,
iii. send to the pre-deployment governance module if an impact is identified,
iv. update the planner entry in function of the impact found,
v. send the planner entry updated to the database (20),
- the pre-deployment governance module (43) is configured to identify missing areas of impact utilizing feedback and/or historic data and by applying methods to predict and prescribe so, and
- the impact identifier system (4) is configured to decide for each planner entry if extra action is required or if it is only an information update to the tracker system.

10. Planification system (1) comprising the tracker (2) according to claim 9 and a customer identifier (6) which includes an affected customers identification module (61), an interested customers identification module (62) and a delivery plan module (63) wherein:
- the affected customers identification module (61) is configured to:
i. identify for each planner entry relating to a tracker entry having status new or in progress, the customers related to the feature/service or technology of the planner entry,
ii. for each customer identified having an interest, identify a customer SPOC, and request it if the customer should receive the change (software adaptation or configuration update) by default
- the interested customers identification module (62) is configurated to
i. track the customers interested to acquire the software adaptation or configuration update,
ii. to identify a contact specific address of customer communicator (67) to communicate the upcoming update and its impact
iii. decide for a customer entry if they are interested to fund the change software adaptation or configuration update
iv. update the customer decision to the related planner entry into the tracker (20),
- the delivery plan module (63) is configured to export or update for each planner the priority, a delivery plan, which includes:
i. a list of prioritized planner entries,
ii. a cost estimation of the plan including the cost estimation of each planner entry,
iii. timeline of execution including the development quarter of each planner entry,
iv. a list of affected customers including those who by default will receive the update as well as those willing to fund the delivery of the update
- and the customer identifier (6) is configured to update for each planner the priority, budget, development quarter and status into the tracker (20).

11. Planification system (1) according to claim 9 or 10, comprising an expert system (12) for the triage process, comprising the impact identifier 4, the expert system (12) can receive information from the communication module 28 and sent a data which can be : a new technology entry or request to change the new technology entry and can add or change the details of the technology entry in each item, when the tracker entry is new.

12. Updates classification process on updates comprising the following steps of:
- identifying new information on the update in a road map on the future updates,
- classifying the new information by searching for a corresponding entry in the updates information database which corresponds to the new information, the classification of the new information is
i. referenced if an entry is found, and a classificatory module uploads the new information in the corresponding entry of the database or
ii. new if no entry is found, and the classificatory module creates new entry comprising the new information,
- identifying at least one access expert to communicate with an expert wherein
i. if the classification is "referenced", an identification module extracts in the database an expert identification data linked to the entry,
ii. if the classification is new, the identification module searches an indicator in the new information to identify an expert identification data or choose an expert identification data of the closest resembling entry and is adapted to link this an expert identification data with the new entry,
- sending information about the new information to the access expert identified from the expert identification data extracted or identified or choose.
